# EUROPÄISCHE PATENTANMELDUNG

(11) **EP 0 968 888 A2**
(43) Veröffentlichungstag der Anmeldung: **05.01.2000**
(21) Anmeldenummer: 99110072.8
(22) Anmeldetag: 22.05.1999
(51) Int. Cl.: B60R 21/20, B62D 1/04

(54) **Airbagvorrichtung für ein Kraftfahrzeug**

(30) Priorität: 03.07.1998 DE 19829755
(71) Anmelder: DaimlerChrysler AG, 70567 Stuttgart (DE)
(72) Erfinder: Jambor, Arno, 71665 Vaihingen (DE); Kerner, Wolfgang, 72184 Eutingen (DE)

(57) **Zusammenfassung**

In einer Airbagvorrichtung für ein Kraftfahrzeug, insbesondere in einem Lenkrad eines Fahrzeuginnenraumes ist eine, dem Fahrzeuginnenraum zugewandte Oberfläche einer Polsteranordnung (4) zumindest teilweise von einer dünnwandigen Metallblechplatineneinheit (3) überdeckt, die fest mit der Oberfläche der Polsteranordnung verbunden ist und die im Bereich von Seitenrändern der Polsteranordnung (4) sowie im Bereich der wenigstens einen Aufreißkante mit wenigstens einem nach innen zur Polsteranordnung umgeformten Umschlagrand (12,13) versehen ist.

## Beschreibung

Die Erfindung betrifft eine Airbagvorrichtung für ein Kraftfahrzeug, insbesondere in einem Lenkrad eines Fahrzeuginnenraumes, mit einer sich wenigstens über eine Austrittsöffnung für eine Airbageinheit erstreckenden, zu einem Fahrzeuginnenraum gerichteten Polsteranordnung, die wenigstens eine durch eine Aufreißkontur definierte Aufreißklappe zum Freigeben der Austrittsöffnung bei einer Expansion eines Airbags der Airbageinheit aufweist.

Eine solche Airbagvorrichtung ist für Personenkraftwagen allgemein bekannt. Die Airbagvorrichtung ist insbesondere in einem Lenkrad des Personenkraftwagens integriert. In gleicher Weise ist eine solche Airbagvorrichtung jedoch auch in einem Beifahrerbereich eines Personenkraftwagens vorgesehen. Eine Austrittsöffnung einer Airbageinheit der Airbagvorichtung ist auf einer zum Fahrzeuginnenraum gewandten Außenseite mit einer Polsteranordnung versehen, die auf Höhe der Austrittsöffnung für einen Airbag wenigstens eine Aufreißkontur aufweist. Bei einer schlagartigen Expansion des Airbags wird die Polsteranordnung entlang der Aufreißkontur zerstört und die Austrittsöffnung für die Expansion des Airbags freigegeben.

Aufgabe der Erfindung ist es, eine Airbagvorichtung der eingangs genannten Art zu schaffen, die trotz sicherheitstechnischer Anforderungen in ihrer Optik für den Fahrzeuginnenraum stilistisch ansprechend gestaltbar ist.

Diese Aufgabe wird dadurch gelöst, daß eine dem Fahrzeuginnenraum zugewandte Oberfläche der Polsteranordnung zumindest teilweise von einer dünnwandigen Metallblechplatineneinheit überdeckt ist, die fest mit der Oberfläche der Polsteranordnung verbunden ist und die im Bereich von Seitenrändern der Polsteranordnung sowie im Bereich der wenigstens einen Aufreißkontur mit wenigstens einem nach innen zur Polsteranordnung umgeformten Umschlagrand versehen ist. Insbesondere bei einem Einsatz der Airbagvorrichtung in einem Lenkrad ist es durch die erfindungsgemäße Lösung möglich, für das Lenkrad den Eindruck eines Metallspeichen-Lenkrades zu erzielen, und dennoch die entsprechenden Sicherheitsanforderungen für heutige Kraftfahrzeuge zu erfüllen. Entsprechende stilistische Eindrücke sind jedoch auch für eine Beifahrerseite eines Cockpitbereiches des Fahrzeuginnenraumes erzielbar, indem die Metallblechplatineneinheit eine entsprechende Polsteranordnung des Cockpitbereiches auf Höhe einer Beifahrerairbageinheit überdeckt. Der nach innen umgeformte Umschlagrand der Polsteranordnung gewährleistet, daß die entsprechenden Schnittränder der Metallblechplatineneinheit von der sichtbaren Oberfläche weggeführt sind und somit keine Verletzungsgefahren für Fahrzeuginsassen darstellen können. Dies ist insbesondere bei einem Kopfaufschlag auf das Lenkrad oder auf den beifahrerseitigen Cockpitbereich vorteilhaft. Die Metallblechplatineneinheit kann einstückig oder auch mehrteilig gestaltet sein, abhängig von dem zu überdeckenden Flächenbereich der Polsteranordnung, der im Aufreißbereich ebenfalls unterteilt sein kann. Die Aufreißkonturen können an der Unterseite der Polsteranordnung vorgesehen sein, so daß sie zur Oberfläche hin unsichtbar sind. Der nach innen umgeformte Umschlagrand ist vorteilhaft zumindest teilweise in die Polsteranordnung eingebettet.

In Ausgestaltung der Erfindung ist die Metallblechplatineneinheit mittels wenigstens einer Befestigungslasche mit einer Trägeranordnung für die Airbageinheit verbunden. Dadurch wird die Festlegung der Metallplatineneinheit an der Airbagvorrichtung noch verbessert, so daß ein Abreißen der Polsteranordnung sowie der Metallblechplatineneinheit bei einem Expansionsvorgang der Airbagvorrichtung zuverlässig vermieden wird.

In weiterer Ausgestaltung der Erfindung ist die Metallblechplatineneinheit flächig mit der Polsteranordnung insbesondere durch Verschweißung, durch ein Spritzverfahren oder durch Verklebung verbunden. Dadurch wird ein Ablösen der Metallblechplatineneinheit von der Polsteranordnung zuverlässig vermieden.

In weiterer Ausgestaltung der Erfindung umgreift der wenigstens eine Umschlagrand der Metallblechplatineneinheit im Bereich der Seitenränder die Seitenränder zumindest abschnittsweise formschlüssig. Dadurch wird die Sicherheit gegen ein Ablösen der Metallblechplatineneinheit von der Polsteranordnung weiter verbessert.

In weiterer Ausgestaltung der Erfindung ist die wenigstens eine Aufreißklappe wenigstens teilweise von einer fest mit der Aufreißklappe und/oder der Metallblechplatineneinheit verbundenen Plakette überdeckt. Auf dieser Plakette kann ein Firmenemblem aufgebracht sein. Die Plakette ist als Platte oder Scheibe gestaltet und kann vorzugsweise runde, ovale oder auch polygonale Form aufweisen.

In weiterer Ausgestaltung der Erfindung ist die Plakette derart dimensioniert, daß sie die Aufreißkontur überdeckt. Dadurch ist die Aufreißkontur unsichtbar angeordnet, wodurch die gesamte Polsteranordnung der Airbagvorrichtung ästhetisch ansprechend gestaltbar ist.

Weitere Vorteile und Merkmale der Erfindung ergeben sich aus den Unteransprüchen. Nachfolgend werden bevorzugte Ausführungsbeispiele der Erfindung beschrieben und anhand der Zeichnungen dargestellt.
- Fig. 1: zeigt eine Draufsicht auf ein Lenkrad eines Personenkraftwagens, das mit einer Ausführungsform einer erfindungsgemäßen Airbagvorrichtung versehen ist,
- Fig. 2: einen Schnitt durch das Lenkrad nach Fig. 1 entlang der Schnittlinie II-II in Fig. 1,
- Fig. 3: ein Lenkrad ähnlich Fig. 1, dessen Polsteranordnung mit einer Metallblechplatineneinheit sowie mit einer zentral angeordneten Plakette versehen ist,
- Fig. 4: einen Schnitt durch das Lenkrad nach Fig. 3 entlang der Schnittlinie IV-IV in Fig. 3,
- Fig. 5: ein weiteres Lenkrad ähnlich Fig. 3,
- Fig. 6: einen Schnitt durch das Lenkrad nach Fig. 5 entlang der Schnittlinie VI-VI in Fig. 5,
- Fig. 7: ein weiteres Lenkrad ähnlich der Lenkräder nach den Fig. 3 und 5, und
- Fig. 8: einen Schnitt durch das Lenkrad nach Fig. 7 entlang der Schnittlinie VIII-VIII in Fig. 7.

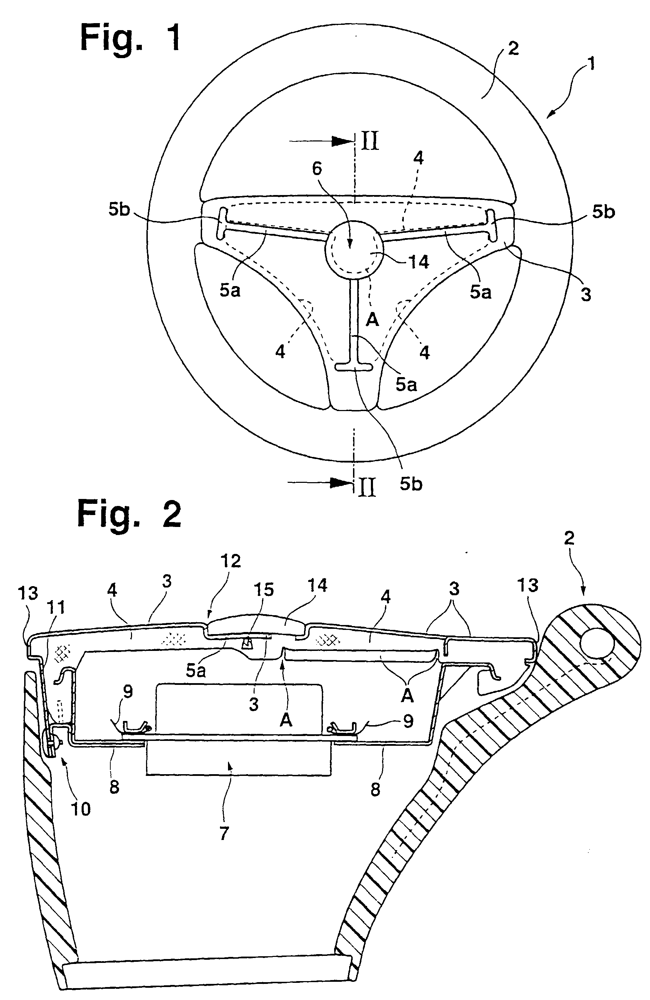

Ein Lenkrad 1 weist gemäß Fig. 1 einen Lenkradkranz 2 auf, innerhalb dessen eine Airbagvorrichtung in nachfolgend näher beschriebener Weise angeordnet ist. Die Airbagvorrichtung weist eine Polsteranordnung 4 auf, die die Oberseite und nach außen sichtbare Fläche der Airbagvorrichtung bildet und die vorzugsweise als Spritzgußteil aus einem thermoplastischen Elastomer gestaltet ist. Die Polsteranordnung 4 bildet Lenkradspeichen und ist an ihrer Unterseite formschlüssig an einer topfartigen Trägeranordnung 8 festgelegt, die eine Airbageinheit 7, 9 trägt. Die Trägeranordnung 8 ist in an sich bekannter Weise innerhalb des Lenkrades festgelegt. Beim dargestellten Ausführungsbeispiel wird die Airbageinheit 7, 9 durch einen an der Trägeranordnung 8 festgelegten Gasgenerator 7 sowie einen lediglich angedeuteten Airbag 9 gebildet, der innerhalb der topfartigen Trägeranordnung 8 in seinem Ruhezustand zusammengefaltet ist.

Die Polsteranordnung 4 ist mit mehreren als Aufreißkonturen dienenden Aufreißkanten A versehen, die sich unterhalb von drei schlitzförmigen Abschnitten 5a befinden, auf die nachfolgend noch näher eingegangen wird. Die Aufreißkanten A werden jeweils als schlitzartige Nut von einer Unterseite her in die Polsteranordnung 4 eingebracht. Durch die Aufreißkanten A, die sternförmig auf einen eine Plakette 12 tragenden Emblemabschnitt 6 der Polsteranordnung 4 zulaufen und den Emblemabschnitt 6 teilweise umlaufend flankieren, werden drei Aufreißklappenabschnitte gebildet, wobei der Emblemabschnitt 6 einem oberen Aufreißklappenabschnitt zugeordnet ist.

Die Polsteranordnung 4 ist im Bereich ihrer zum Fahrzeuginnenraum gewandten Oberfläche von einer als einstückige Platine gestalteten Metallblechplatineneinheit 3 überdeckt, die eine dünnwandige Aluminiumblechplatine mit einer Dicke von vorzugsweise zwischen 0,5 mm und 0,7 mm darstellt. Die Metallblechplatineneinheit 3 überdeckt die Polsteranordnung 4 flächig und ist flächig mit der Oberfläche der Polsteranordnung 4 verbunden, insbesondere verklebt, verschweißt oder hinterspritzt. Im Bereich von Schnitträndern der Metallblechplatineneinheit 3 weist die Metallblechplatineneinheit 3 etwa rechtwinklig nach innen umgebogene oder in anderer Weise umgeformte Umschlagränder 12, 13 auf. Die Umschlagränder 12 sind im Bereich der Aufreißkanten A derart gestaltet, daß sich T-förmige Streifenbereiche 5a, 5b ergeben, die etwa den Konturen der Aufreißklappenabschnitte der Polsteranordnung 4 entsprechen. Im Bereich dieser Umschlagränder 12 sind die Schnittkanten rechtwinklig nach innen abgewinkelt und in das Material der Polsteranordnung 4 versenkt. Im Bereich der Außenränder der Polsteranordnung 4 sind die Umschlagränder 13 nach innen - vorzugsweise durch Tiefziehen oder Biegen - umgeformt und zusätzlich formschlüssig mit der Polsteranordnung 4 an über den Umfang der Polsteranordnung 4 verteilten Stellen verstemmt.

Die Plakette 12 ist auf einem im Bereich des Emblemabschnittes 6 abgestuften Abschnitt der Metallblechplatineneinheit 3 festgelegt, beim dargestellten Ausführungsbeispiel bereits vor der flächigen Verbindung mit der Polsteranordnung 4 in einem Durchbruch der Metallblechplatineneinheit 3 mittels eines Spritzzapfens formschlüssig durch Hinterspritzen verbunden.

Außerdem weist die Metallblechplatineneinheit 3 mehrere, über ihren Umfang verteilte Befestigungslaschen 11 auf, die einstückig an den Umschlagrändern 13 angeformt sind und bis auf Höhe der Trägeranordnung 8 der Airbagvorichtung nach innen abragen. Die Befestigungslaschen 11 sind mit Hilfe von Nietverbindungen 10 oder anderen Befestigungsmitteln unlösbar und kraftübertragend mit der Trägeranordnung 8 verbunden.

In einer Draufsicht von oben sind von dem Speichenbereich des Lenkrades 1 nahezu ausschließlich die Metallblechplatineneinheit 3 und die Plakette 14 sichtbar, die auch den Emblemabschnitt 6 überdeckt. Lediglich auf Höhe der Streifenbereiche 5a, 5b ist die unter der Metallblechplatineneinheit 3 liegende Polsteranordnung erkennbar. Die Streifenbereiche 5a, 5b sind so gewählt, daß die die Polsteranordnung 4 überdeckende Metallblechplatineneinheit 3 die Aufreißklappenfunktion der Polsteranordnung 4 bei einer schlagartigen Expansion des Airbags 9 nicht behindert.

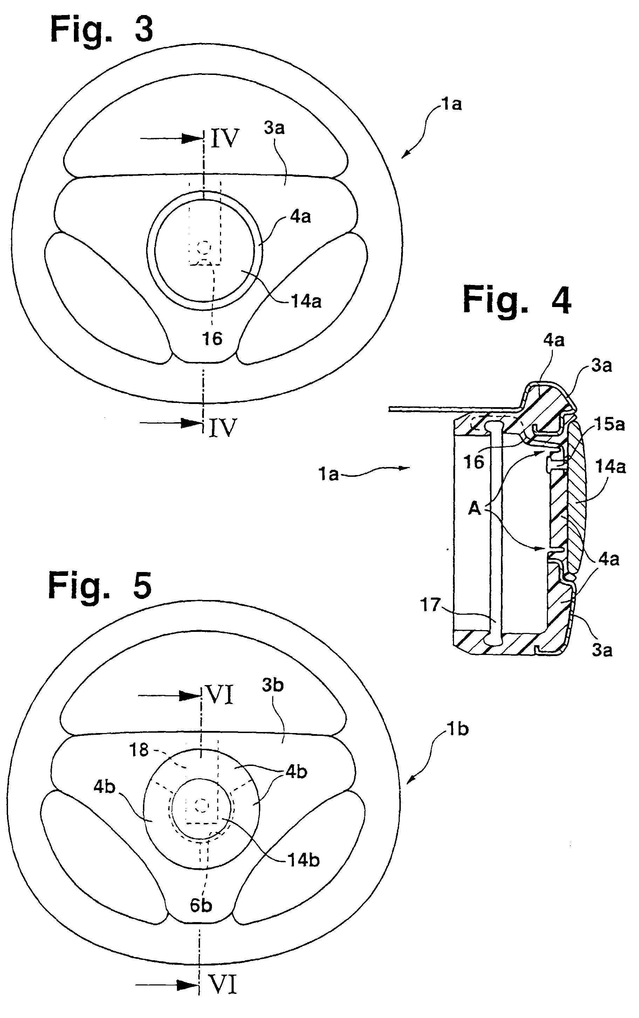

Auch die nachfolgend beschriebenen Ausführungsbeispiele nach den Fig. 3 bis 8 weisen jeweils Metallblechplatineneinheiten 3a bis 3c auf, die analog dem zuvor beschriebenen Ausführungsbeispiel flächig mit einer der zuvor beschriebenen Polsteranordnung 4 entsprechenden Polsteranordnung 4a bis 4c verbunden sind. Bei nachfolgend beschriebenen Lenkrädern 1a bis 1c werden somit lediglich die Unterschiede zum Ausführungsbeispiel nach den Fig. 1 und 2 noch einmal ausführlich beschrieben. Dabei weisen auch die Lenkräder 1a bis 1c Airbagvorrichtungen auf, die analog der Airbagvorrichtung nach den Fig. 1 und 2 aufgebaut ist. Insbesondere die Gestaltung und Anbindung der Metallblechplatineneinheiten 3a bis 3c wie auch das Vorhandensein einer Trägeranordnung für die Airbagvorrichtung und das Vorhandensein der Airbagvorrichtung selbst wird somit an dieser Stelle nicht mehr näher beschrieben. Hierfür wird auf die zuvor erfolgte Offenbarung verwiesen.

Das Lenkrad 1a nach den Fig. 3 und 4 weist eine zentrale, scheibenförmige Plakette 14a auf, die beim dargestellten Ausführungsbeispiel aus Kunststoff besteht und mittels wenigstens eines Spritzzapfens 15a mit der Polsteranordnung 4a hinterspritzt, d.h. mittels einer Spritzgußanordnung flächig verbunden ist. Die Metallblechplatineneinheit 3a endet im Bereich des durch die Plakette 14a definierten Emblemabschnittes der Polsteranordnung 4a. Die Plakette 14a überdeckt eine umlaufende, kreisförmige Aufreißkontur A.

Mit dem Bezugszeichen 17 ist bei den Ausführungsbeispielen nach den Fig. 3 bis 6 jeweils eine zusätzliche Sicherungsnut zum Hinterclipsen für die Airbagvorrichtung beschrieben, die an sich bekannt ist.

Die durch die umlaufende Aufreißkontur A gebildete, ebenfalls scheibenförmige Aufreißklappe, die einen geringeren Durchmesser als die Plakette 14a aufweist, ist mittels einer Scharnieranordnung in Form eines Scharnierbandes 16 einschließlich der Plakette 14a mit den Außenbereichen der Polsteranordnung 4a verbunden. Dabei ist die flexible Scharnieranordnung 16 in Form des Scharnierbandes in die Polsteranordnung 4a eingebettet, so daß sie auch beim schlagartigen Aufsprengen des Emblemabschnittes und der Plakette 14a durch die Auslösung des Airbags nicht von der Polsteranordnung 4a entfernt werden kann. Das Scharnierband 16 umgreift formschlüssig den Spritzzapfen 15a im Bereich des Emblemabschnittes der Polsteranordnung 4a, wodurch eine zusätzliche Sicherung der Plakette 14a und des Emblemabschnittes erzielt werden. Wie anhand Fig. 3 erkennbar ist, verbleibt eine schmale Kreisfuge zwischen der Metallblechplatineneinheit 3a und der Plakette 14a, die die Polsteranordnung 4a erkennen läßt.

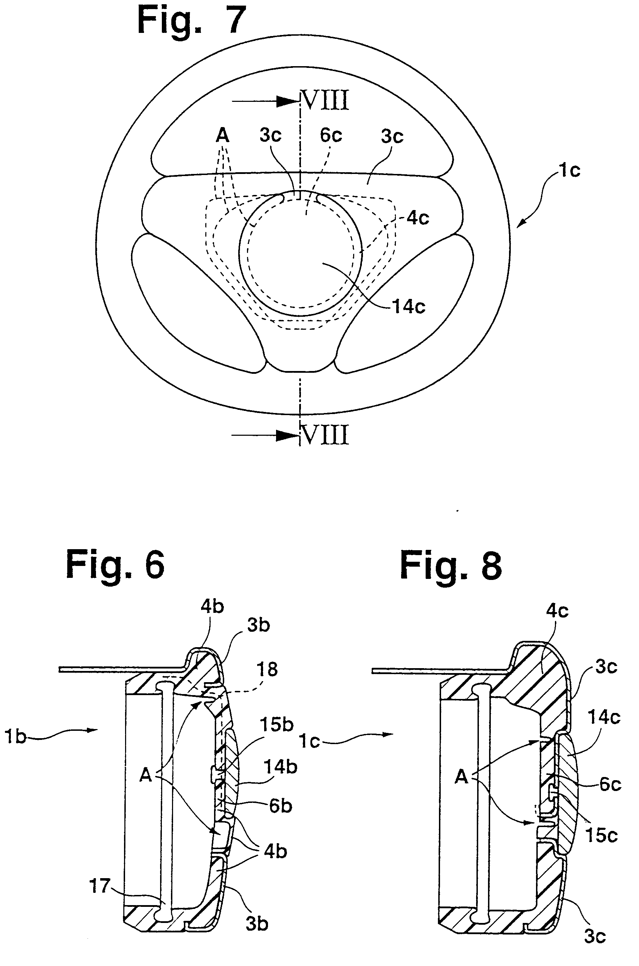

Das Lenkrad 1b nach den Fig. 5 und 6 weist ebenfalls eine Metallblechplatineneinheit 3b auf, die einen Aufreißbereich der Polsteranordnung 4b umschließt. Konzentrisch innerhalb des kreisförmigen Aufreißbereiches der Polsteranordnung 4b ist eine Plakette 14b angeordnet. Die Plakette 14b ist analog dem zuvor beschriebenen Ausführungsbeispiel mittels eines Spritzzapfens 15b mit der Polsteranordnung 4b durch Hinterspritzen formschlüssig verbunden. Die Polsteranordnung 4b bildet durch entsprechende Aufreißkonturen A insgesamt drei Kreisringabschnitte, wobei an einem in Fig. 5 oberen Kreisringabschnitt zusätzlich ein die Plakette 14b tragender Emblemabschnitt einstückig angeformt ist. Die Aufreißkontur umschließt diesen Emblemabschnitt 6b ähnlich der Darstellung des Ausführungsbeispiels nach Fig. 1. Der Aufreißbereich der Polsteranordnung 4b bildet somit drei kreisringsegmentförmige Aufreißklappen, die mit geringen Schwenkradien aufreißen. Die obere, die Plakette 14b mittels ihres Emblemabschnittes 6b tragende Aufreißklappe ist zudem mittels eines flexiblen Scharnierbandes 18 mit der im Bereich der Metallblechplatineneinheit 3b vorgesehenen Polsteranordnung 4b verbunden, wobei das Scharnierband 18 in der Polsteranordnung 4b und dem Emblemabschnitt 6b integriert ist. Auch das Scharnierband 18 umgreift den Spritzzapfen 15b der Plakette 14b formschlüssig, indem es auf dieser Höhe eine Aussparung aufweist. Im Falle der Auslösung des Airbags wird somit die Plakette 14b einschließlich des zugehörigen Emblemabschnittes 6b verliersicher am Lenkrad gehalten, wodurch Verletzungen des Fahrers vermieden werden können.

Das Lenkrad 1c nach den Fig. 7 und 8 ist beim dargestellten Ausführungsbeispiel dreispeichig gestaltet. Es kann jedoch in gleicher Weise vierspeichig ausgebildet sein, ohne daß sich bezüglich der nachfolgend beschriebenen Merkmale irgendwelche Unterschiede ergeben. Bei diesem Lenkrad 1c überdeckt die Metallblechplatineneinheit 3c nahezu die gesamte Oberfläche der Polsteranordnung 4c. Sie endet im Bereich eines kreisrunden Emblemabschnittes 6c, der eine Plakette 14c trägt. Durch eine umlaufende Aufreißkontur A, die kreisförmig, elliptisch oder auch polygonal gestaltet sein kann, wird die Aufreißklappe der Polsteranordnung 4c gebildet, die beim Ausführungsbeispiel nach den Fig. 7 und 8 mit dem Emblemabschnitt 6c identisch ist. Als Scharnieranordnung dient beim Ausführungsbeispiel nach den Fig. 7 und 8 die Metallblechplatineneinheit 3c selbst, indem ein Streifenabschnitt der Metallblechplatineneinheit 3c bis in den Emblemabschnitt 6c gemäß Fig. 8 fortgeführt ist. Die Plakette 14c hintergreift mittels einer entsprechenden Spritznase 15c diesen Streifenabschnitt der Metallblechplatineneinheit 3c formschlüssig, wobei die Festlegung der Plakette 14c an der Metallblechplatineneinheit 3c der Anordnung gemäß Fig. 2 entspricht. Die Plakette 14c ist so groß ausgebildet, daß sie die Aufreißklappe und damit den Emblemabschnitt 6c der Polsteranordnung 4c vollkommen überdeckt. Dies ist durch die gestrichelten Bezugslinien in Fig. 7 verdeutlicht. Eine Aufreißklappe mit polyongaler Aufreißkontur A ist für dieses Ausführungsbeispiel insbesondere dann vorteilhaft, wenn im Bereich des Streifenabschnittes der Metallblechplatineneinheit 3c, der die Scharnieranordnung bildet, die Aufreißkontur A geradlinig verläuft. Dadurch wird ein weitgehend spannungsfreies Aufschwenken des Streifenabschnittes und der Plakette 14c erzielt. Der Streifenabschnitt ist somit stegförmig gestaltet.

## Patentansprüche

1. Airbagvorrichtung für ein Kraftfahrzeug, insbesondere in einem Lenkrad eines Fahrzeuginnenraumes, mit einer sich wenigstens über eine Austrittsöffnung für eine Airbageinheit erstreckenden, zu einem Fahrzeuginnenraum gerichteten Polsteranordnung, die wenigstens eine durch eine Aufreißkontur definierte Aufreißklappe zum Freigeben der Austrittsöffnung bei einer Expansion eines Airbags der Airbageinheit aufweist,
**dadurch gekennzeichnet,**
daß eine dem Fahrzeuginnenraum zugewandte Oberfläche der Polsteranordnung (4) zumindest teilweise von einer dünnwandigen Metallblechplatineneinheit (3) überdeckt ist, die fest mit der Oberfläche der Polsteranordnung (4) verbunden ist und die im Bereich von Seitenrändern der Polsteranordnung (4) sowie im Bereich der wenigstens einen Aufreißkontur (A) mit wenigstens einem nach innen zur Polsteranordnung (4) umgeformten Umschlagrand (12, 13) versehen ist.

2. Airbagvorrichtung nach Anspruch 1,
**dadurch gekennzeichnet,**
daß die Metallblechplatineneinheit (3) mittels wenigstens einer Befestigungslasche (11) mit einer Trägeranordnung (8) für die Airbageinheit (7, 9) verbunden ist.

3. Airbagvorichtung nach Anspruch 1 oder 2,
**dadurch gekennzeichnet,**
daß der wenigstens eine Umschlagrand (13) der Metallblechplatineneinheit (3) im Bereich der Seitenränder der Polsteranordnung (4) die Seitenränder zumindest abschnittsweise formschlüssig umgreift.

4. Airbagvorrichtung nach einem der vorhergehenden Ansprüche,
**dadurch gekennzeichnet,**
daß die Metallblechplatineneinheit (3) flächig mit der Polsteranordnung (4) verklebt ist.

5. Airbagvorrichtung nach Anspruch 1,
**dadurch gekennzeichnet,**
daß die wenigstens eine Aufreißklappe wenigstens teilweise von einer fest mit der Aufreißklappe und/oder der Metallblechplatineneinheit (3, 3a, 3b, 3c) verbundenen Plakette (14, 14a, 14b, 14c) überdeckt ist.

6. Airbagvorrichtung nach Anspruch 5,
**dadurch gekennzeichnet,**
daß die Plakette (14, 14a, 14c) derart dimensioniert ist, daß sie die Aufreißkontur (A) überdeckt.

7. Airbagvorrichtung nach Anspruch 5 oder 6,
**dadurch gekennzeichnet,**
daß die Plakette (14, 14c) mit der Metallblechplatineneinheit (3, 3c) fest verbunden ist.

8. Airbagvorrichtung nach einem der Ansprüche 5 bis 7,
**dadurch gekennzeichnet,**
daß die Plakette (14a, 14b) mittels einer flexiblen Scharnieranordnung (16, 18) mit der Polsteranordnung (4a, 4b) verbunden ist.

9. Airbagvorrichtung nach Anspruch 8,
**dadurch gekennzeichnet,**
daß die Scharnieranordnung durch wenigstens ein Scharnierband (16, 18) gebildet ist.

10. Lenkrad für einen Fahrzeuginnenraum eines Personenkraftwagens mit einer Airbagvorrichtung und einer die Airbagvorrichtung überdeckenden Polsteranordnung,
**dadurch gekennzeichnet,**
daß die Airbagvorrichtung die Merkmale nach wenigstens einem der vorhergehenden Ansprüche aufweist.
